# EUROPEAN PATENT SPECIFICATION

(11) **EP 4 173 956 B1**
(45) Date of publication and mention of the grant of the patent: **18.03.2026**
(21) Application number: 21205630.3
(22) Date of filing: 29.10.2021
(51) Int. Cl.: B64D 27/24, B64D 27/02

(54) **HYBRID PROPULSION SYSTEM FOR PROPELLING AN AIRCRAFT, METHOD OF OPERATING SAME, AND HYBRID AIRCRAFT**
HYBRIDANTRIEBSSYSTEM ZUM ANTREIBEN EINES FLUGZEUGES, VERFAHREN ZU DESSEN BETRIEB UND HYBRIDFAHRZEUG
SYSTÈME DE PROPULSION HYBRIDE POUR PROPULSER UN AÉRONEF, SON PROCÉDÉ DE FONCTIONNEMENT ET AÉRONEF HYBRIDE

(43) Date of publication of application: 03.05.2023
(73) Proprietor: Airbus S.A.S., 31700 Blangnac (FR)
(72) Inventor: Carretero Benignos, Jorge A., 82024 Taufkirchen (DE); Molano Rembiasz, Jorge, 82024 Taufkirchen (DE)
(74) Representative: KASTEL Patentanwälte PartG mbB

(56) References cited:
- EP-A1- 3 805 107
- EP-A1- 4 225 645
- WO-A1-2020/079419
- US-A1- 2006 254 255
- US-B2- 10 774 741

## Description

The invention relates to a hybrid propulsion system for propelling an aircraft, a method of operating a hybrid propulsion system for propelling an aircraft, and a hybrid aircraft.

Aviation is an efficient transportation means for passengers and cargo, and it is therefore essential for mobility and global economy. However, aviation is contributing to the greenhouse effect due to gas emissions. Therefore, gas emissions having an impact on the climate have to be reduced.

Hydrocarbon fuels need to be replaced soon as far as possible. In aviation, a switch from conventional gas turbine engine to hybrid has been identified as a growing market with a high number of aeroplanes in the next years and decades. Many research institutes and companies have been searching for viable propulsion architectures to eliminate or reduce aircraft emissions for regional and larger aircrafts.

For example, EP 2 712 013 B1 discloses a fuel cell system for an aircraft and a method for operating the fuel cell system in the aircraft. The fuel cell system comprises fuel cell units coupled to a hydrogen tank.

EP 0 780 631 B1 discloses a method for the combustion of hydrogen in a burner inside a combustion chamber of a gas turbine, where hydrogen and air are injected into the burner.

EP 3 805 107 A1 discloses a hybrid propulsion system for aircrafts, comprising at least a fuel cell unit for providing power to drive an aircraft by using hydrogen in a redox reaction, at least a gas turbine for providing power to drive the aircraft by burning hydrogen, a hydrogen source for providing the hydrogen to the fuel cell unit and/or to the gas turbine and at least an electric propulsion unit for driving the aircraft. The electric propulsion unit is electrically powered by the fuel cell unit and/or mechanically by the gas turbine in at least two different propulsion modes. A control unit controls the power supply to the electric propulsion unit. In a first propulsion mode for a first flight phase the electric propulsion unit is essentially or only powered by the fuel cell unit, and in a second propulsion mode for a second flight phase the electric propulsion unit is essentially or only powered by the gas turbine.

WO 2020 / 079 419 A1 discloses a multi source aircraft propulsion system comprising a cryogenic and a combustion propulsion source, which can be selectively and independently operated to generate the propulsive force.

US 10,774,741 B2 discloses an aeronautical propulsion system including a turbine engine having a fan and an electric motor coupled thereto, and a fuel cell for providing electrical energy to the electric motor. The fuel cell provides constant flow of electric power during take-off and climb.

EP 4 225 645 A1 shows a hybrid propulsion system for an aircraft comprising a combustion unit and a fuel cell unit, and a controller for controlling them. The fuel cell unit is operated for propelling the aircraft during cruise at the cruise altitude. The combustion unit is operated for propelling the aircraft during start, climb and landing.

A problem related to the use of fuel cells for propelling an aircraft is the higher weight and the reduced performance of aircrafts equipped with fuel cells compared to today's conventional aircrafts.

It is the object of the invention to reduce mission contaminant emissions of aircrafts while increasing the performance of aircrafts having reduced emissions. The object is achieved by the subject-matter of the independent claims. Preferred embodiments are subject-matter of the dependent claims.

The invention provides a hybrid propulsion system for propelling an aircraft, comprising a first propulsion system based on fuel cells, a second propulsion system based on one or more combustion engines, and a control unit for controlling the operation of the first propulsion system and of the second propulsion system depending on the load thrust in a specific segment of a flight mission, wherein the first propulsion system is designed for fully providing a base thrust needed in base load segments (A) of the flight mission including taxiing, cruise of the aircraft at a cruise altitude, descent and landing segments, and the second propulsion system is designed for providing a peak thrust needed during peak load segments (B) of the flight mission including take-off of the aircraft and/or for assisting the first propulsion system in propelling the aircraft when the peak thrust is needed, wherein the second propulsion system is operated by the control unit to be turned-off or to provide essentially no thrust during taxiing, cruise at the cruise altitude, descend and landing segments of the flight mission, as long as the peak thrust of the second propulsion system is not needed due to other specific conditions.

The invention is able to reduce contaminant emissions of aircrafts while still providing a high performance of the emission reduced aircraft.

The hybrid propulsion system reduces significantly full mission contaminant emissions while minimizing fuel block degradation since added weight and drag of the propulsion system is reduced. In particular, the invention provides a propulsion architecture capable of drastically reducing mission contaminant emissions while only having a small impact in mission performance due to added weight and drag of said propulsion system. For example, the invention may provide an advantage by enabling an emission reduction of about 60% and more in a 300 nm mission.

Preferably, the first propulsion system comprises hydrogen fuel cells. It may be configured as a fuel cell propeller propulsion system. The first propulsion system comprises in particular one or more fuel cell engines or FC engines, each FC engine having a propeller with a number of blades. In particular, each FC engine is powered by fuel cells.

Preferably, in the first propulsion system, a number of propulsors or FC engines are arranged e.g. along the wing, in order to deliver thrust to the aircraft, in this way forming a distributed fuel cell propulsion system.

The base thrust provided by the first propulsion system is in particular a thrust needed for cruise of the aircraft at a cruise altitude.

The base thrust provided by the first propulsion system may be a thrust needed at a different predefined condition if fuel cell usage is to be further maximized.

The base thrust provided by the first propulsion system may be a thrust needed for further climbing from a first altitude reached after take-off or during cruise to a second altitude.

The first propulsion system is designed for fully propelling the aircraft during cruise or a different predefined condition if fuel cell usage is to be further maximized.

The peak thrust provided by the second propulsion system is a thrust which is needed during specific conditions, e.g. during take-off and short after it or in other flight phases requiring peak thrust, for example at a relatively high climb rate, or under other specific conditions e.g. during hot days.

The second propulsion is turned-off or providing essentially no thrust during taxiing, cruise of the aircraft at the cruise altitude, descend and landing segments. It can also be turned-off or providing essentially no thrust during climb at a relatively low climb rate after take-off of a flight mission.

The hybrid propulsion system comprises a control unit for controlling the operation of the first propulsion system and of the second propulsion system depending on the load thrust in a specific segment of a mission. The control unit may also be able to control the propulsion systems depending on an ambient temperature.

The first propulsion system based on fuel cells and the combustion engines may or may not share the same fuel.

Preferably, the first and the second propulsion system are powered by the same fuel. In particular both propulsion systems can be powered by hydrogen.

But it is also possible that the first and second propulsion systems are powered by different fuels. For example, only the first propulsion system may be powered by hydrogen and the combustion engines of the second propulsion system may be based on kerosene or alternative fuels like e.g. methane.

The first propulsion system based on fuel cells and the combustion engines may not necessarily be of the same power rating.

The first propulsion system providing base load thrust and the second propulsion system providing additional thrust at peak loads may be designed for sending electric power to each other.

The combustion engine of the second propulsion system can also be called combustor or peaker. The base load or first propulsion system based on fuel cells and the second propulsion system based on a combustor and also called peaker may or may not send electric power to each other.

Preferably, the second propulsion system is designed for transmitting electrical power to augment the thrust of the first propulsion system during take-off and/or climb and/or fuel cell failures.

Advantageously, the first propulsion system may be designed for transmitting electrical power to an electric motor attached to the second propulsion system e.g. when off to homogenize thrust.

In particular, the electric motor is attached to a shaft of the combustion engine to make use of the fan or propeller of the combustion engine even if it is turned off. A benefit of this scheme is that it allows for homogenization of the propulsive power between the first propulsion system and the combustion engines.

Various configurations are possible. On a first general basis the architecture may use standard kerosene engines as peakers while the base load is covered by the first propulsion system. This configuration already drastically reduces aircraft emissions e.g. by about 60 % for a 300 nm mission.

Further, an H2 burn engine augmenting the H2 fuel cells may be used for the combustion engines. This configuration would be able to lower further the emissions while at the same time drastically reducing contrails.

The hybrid propulsion system may comprise a thermal management system optimized for cooling the first propulsion system during cruise of the aircraft at the cruise altitude or during a different predefined condition if fuel cell usage is to be further maximized.

According to an aspect of the invention, a method of operating a hybrid propulsion system for propelling an aircraft is provided, the hybrid propulsion system comprising a first propulsion system based on fuel cells and a second propulsion system based on one or more combustion engines, wherein the operation of the first propulsion system and of the second propulsion system are controlled by a control unit depending on the load thrust in a specific segment of a flight mission, wherein the first propulsion system is fully providing a base thrust for propelling the aircraft in base load segments of the flight mission including taxiing, cruise of the aircraft at a cruise altitude, descent and landing segments, and the second propulsion system is providing a peak thrust during peak load segments of the flight mission including take-off, and/or is assisting the first propulsion system in propelling the aircraft, wherein the second propulsion system is turned-off or operated to provide essentially no thrust during taxiing, cruise of the aircraft at the cruise altitude, descend and landing segments of the flight mission, as long as no peak thrust is not needed due to other specific conditions.

Preferably, the first propulsion system is fully propelling the aircraft during taxiing, and/or during climb from a first altitude reached after take-off to a second altitude.

The first propulsion system may be fully propelling the aircraft during a different predefined condition if fuel cell usage is to be further maximized.

Preferably, the second propulsion system is fully propelling the aircraft or assisting the first propulsion system in propelling the aircraft during conditions requiring the peak thrust and/or at high ambient temperatures, which may be e.g. above a predefined threshold value.

The operation of the first propulsion system and of the second propulsion system may be controlled depending on an ambient temperature and aircraft speed, which may be above/below a predefined threshold value.

Preferably, the same fuel is provided to the first and the second propulsion system for propelling the aircraft.

The second propulsion system may transmit electrical power to augment the thrust of the first propulsion system during take-off and climb or fuel cell failures

The first propulsion system may transmit electrical power to an electric machine attached to the second propulsion system during cruise and/or descend or any other phase where thrust is to be homogenized.

Preferably, the first propulsion system is cooled by a thermal management system optimized for cooling it during cruise of the aircraft at the cruise altitude.

According to a further aspect, the invention provides a hybrid aircraft comprising a hybrid propulsion system according to the invention, which may be operated by using the method according to the invention.

According to another aspect, the invention provides a hybrid aircraft which comprises a hybrid propulsion system according to the invention.

Characteristics and advantages described in relation to the hybrid propulsion system are also related to the method of operating a hybrid propulsion system and vice versa. The same applies for the hybrid aircraft.

In the following, exemplary embodiments showing further advantages and characteristics are described in detail with reference to the figures, in which:
- **Fig. 1**: shows a schematic perspective view of a hybrid aircraft comprising a hybrid propulsion system according to a preferred embodiment of the invention; and
- **Fig. 2**: shows a schematic diagram of a sample mission profile using the method of operating a hybrid propulsion system according to a preferred example of the invention.

In the figures, similar or identical elements and features are designated by the same reference numbers.

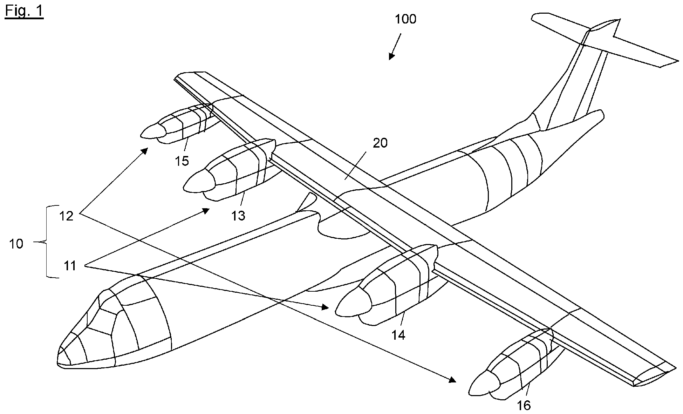

**Figure 1** shows a hybrid aircraft 100 according to a preferred embodiment of the invention. Aircraft 100 is equipped with a hybrid propulsion system 10 for propelling the aircraft. The hybrid propulsion system 10 comprises or is composed of two types of propulsive systems: A first propulsion system 11 based on fuel cells or a fuel cell unit, and a second propulsion system 12 based on one or more combustion engines 15, 16. The hybrid propulsion system 10 may also be called a hybrid combustion assisted propulsion system.

The first propulsion system 11 is designed for fully or solely providing a base load thrust to aircraft 100 which is needed for cruise of the aircraft at a cruise altitude or a different predefined condition if fuel cell usage is to be further maximized. The second propulsion system 12 is designed for providing a peak thrust to aircraft 100 which is needed for take-off and climb of the aircraft and/or for assisting the first propulsion system 11 in propelling the aircraft 100 when the peak thrust is needed.

In the preferred embodiment as shown in this figure, the first propulsion system 11 is based on fuel cell engines 13, 14 forming or comprising propulsors in order to deliver the base thrust to the aircraft 100. Each engine 13, 14 comprises a propeller having a number of blades which are not shown in the figure. Further, each engine 13, 14 may comprise the fuel cells or fuel cell unit or be fed by fuel cells.

The first propulsion system 11 is configured as a distributed fuel cell propulsion system. The fuel cell based engines or propulsors 13, 14 and the combustion-based engines or propulsors 15, 16 are arranged along wing 20 of the aircraft 100. On each side of the aircraft 100 a combustion engine 15, 16 and a fuel cell based propulsor 13, 14 is provided.

The first propulsion or propulsive system 11 is fully capable of propelling the aircraft 100 during taxi, cruise, descend, and landing segments of the aircraft's mission including taxiing after landing. In this way, the hybrid propulsion system 10 has zero emissions during these segments of the mission. The fuel cell based system 11 may be of low or high temperature or SOFC.

The second propulsion or propulsive system 12 provides thrust during the peak load segments of the mission, specifically during take-off until top of climb or a different predefined condition if fuel cell usage is to be further maximized. During these segments, it takes advantage of combustion-based aircraft engines 15, 16 which can be based on kerosene or on alternative fuels like e.g. methane, H2, etc. Preferably the first propulsion system 11 based on fuel cells also provides a part of the thrust during the peak load sections, so that in this case the second propulsion system 12 assists the first propulsion system 11 in delivering the thrust needed at peak loads.

During the mission, the combustion-based engines 15, 16 preferably operate only during the take-off and climb segments, turning off when the cruise altitude is reached. In this way, the second propulsion system 12 may have zero emissions after top of climb and for the rest of the mission. Of course, depending on the mission and specific flight situation, further climb phases or other use of the peak thrust may occur.

The fuel cell engines 13, 14 and the combustion engines 15, 16 may not necessarily be of the same power rating. In addition, they may or may not share the same fuel.

The first propulsion system 11 based on fuel cells and the second propulsion system 12 based on combustion may or may not send electric power to each other. In case where both share electric power, the combustion engine 15, 16 is e.g. configured to transmit electrical power to augment the propulsive power of the fuel cell propulsor 13, 14 during take-off and climb of the aircraft or in case of fuel cells failure

The fuel cell based propulsors or engines 13, 14 are e.g. configured to transmit electricity or electric power to an electric motor attached to a shaft of the combustion engine 15,16, in order to make use of the fan or propeller of the combustion engine 15, 16 even if it is turned off. A benefit of this scheme is that it allows for homogenisation of the propulsive power between the fuel cell based propulsors or pods 13, 14 and the combustion engine or engines 15, 16.

Various configurations are possible for the hybrid propulsion system 10. On a first general basis the architecture may use standard kerosene engines as peakers while the base load is covered by the fuel cell propulsors or pods 13, 14. This configuration already drastically reduces the aircraft's emissions by e.g. about 60 % for a 300 nm mission.

According to another variant, the combustion engine or engines 15, 16 are configured as H2 burn engines augmenting the H2 fuel cells. This configuration is able to reach much lower emissions for the complete aircraft mission while at the same time drastically reducing contrails.

The fuel cell propulsors or pods 13, 14 are e.g. configured to provide 50% of the installed power, while the combustion-based engines 15, 16 provide the other 50% of the installed power. However, other values for the power distribution are possible. For example, the combustion engines may provide more than 50% of the installed power.

That means, during take-off, a 50% or higher share of kerosene or H2 burn is complemented by a 50% share of fuel cell propulsion. During cruise of the aircraft 100, i.e. after the cruise altitude is reached or a different predefined condition if fuel cell usage is to be further maximized, the kerosene or H2 burn is turned off and the propulsive energy is delivered by the fuel cells only. Thus, zero emissions can be produced during the cruise phase or earlier if a different predefined condition is used for the fuel cell engine design if fuel cell usage is to be further maximized. In addition, during taxiing, descend and landing zero emissions can be produced.

In this way, an aircraft propulsive architecture is provided with a minimum weight impact while reducing emissions. As an example, emissions can be reduced by about 80% per mission.

The hybrid propulsion system 10 comprise a thermal management system not shown in the figures, which is optimized for cooling the first propulsion system 11 during cruise of aircraft 100 at the cruise altitude or a different predefined condition if fuel cell usage is to be further maximized. The thermal management system is much smaller and its weight is drastically reduced since the first propulsion system is configured for base load thrust necessary for cruise only or a different predefined condition if fuel cell usage is to be further maximized.

As shown in the figure, two combustion engines 15, 16 and two fuel cell based propulsors 13, 14 are provided to deliver the thrust to the aircraft 100. However, also other numbers of fuel cell based propulsors 13, 14 and combustion-based engines 15, 16 are possible and can be selected according to the specific requirements of the aircraft.

The fuel cell based propulsors 13, 14 may be so-called pods, which means that the fuel cells are integrated in the engines. However, also other configurations can be used, where the fuel cells are located in another part of the aircraft 100.

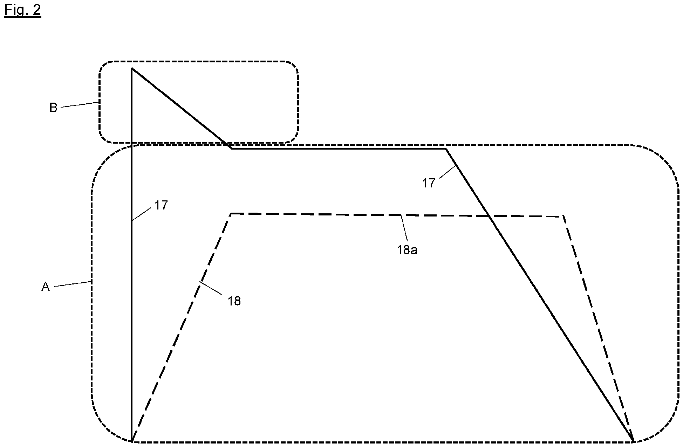

Now referring to **Fig.2****,** a method of operating a hybrid propulsion system for propelling an aircraft is explained as an example in detail.

In this preferred example, the aircraft 100 is configured as described above with reference to figure 1.

The mission profile as shown in figure 2 comprises two sections, i.e. a base load section A and peak load section B. Base load section A comprises in particular the mission segments taxi, cruise and descent. In these sections, the propulsive energy is only provided by the hydrogen fuel cells of the first propulsion system 11.

Peak load section B comprises the mission segments take-off and climb, and also hot day operations, i.e. operations of the aircraft at exceptionally high ambient temperatures.

In peak load section B, additional propulsive power is provided to the aircraft by the combustion engines 15, 16 which assist the fuel cell propulsors 13, 14 in propelling the aircraft 100.

As depicted in the figure, for take-off, the propulsion power represented by line 17 is in the peak load section B, i.e. it is the higher than the base load and provided by the second propulsion system in addition to the power provided by the first propulsion system 11.

During climb, the power is reduced until the altitude represented by line 18 in the diagram reaches the cruise altitude 18a. Here, the power 17 is within the base load section A, i.e. the base load is provided only and only the fuel cell based propulsors 13, 14 are operating to deliver the base load thrust in this section.

For descent, the power 17 already within base load section A further decreases. The cruise altitude 18a is left and aircraft 100 descends for landing. Contamination is minimised.

Preferably, the fuel cells are always operated during the mission, and the H2 or hydrogen burn is turned off at cruise. Preferably it is as well turned off during taxiing, descent and landing. That means that the combustion engines 15, 16 are preferably turned-off during cruise, descend, landing and taxiing.

The fuel cell unit is optimised for cruise conditions or a different predefined condition if fuel cell usage is to be further maximized. The hybrid propulsion system 10 takes advantage of the better specific power of gas turbine engines at take-off, which may use kerosene, H2 or other sustainable aviation fuels. By using the fuel cells for base load thrust only, the fuel cell propulsion system 11 is adapted and optimised to operate at the best operating point. As a result, the cooling system is minimised, which results in benefits in drag and weight.

The size of the thermal management system can be drastically reduced compared to an aircraft where fuel cells are used for take-off. In that case, a much larger thermal management system is needed.

The use of fuel cells for cruise may also help in reducing the creation of contrails, thus reducing the negative climate impact potential of the aircraft.

The invention uses the fact that combustion engines are optimised for take-off and their specific power density is better compared to that of today's state of the art fuel cells. The hybrid propulsion concept according to the invention leads to a lighter and better performing aircraft, while still providing a considerable reduction in emissions. Contamination as well as aircraft weight and drag are minimised.

The fuel cell thermal management system is sized and optimised for cruise or a different predefined condition if fuel cell usage is to be further maximized, where all the power is derived from the fuel cells, while the additional power needed during take-off and climb is provided by the assistance of the combustion engine or engines 15, 16. In particular, take-off and climb are the only phases where combustion engine usage is foreseen. By making use of the combustion engine in this way, the most demanding peak power is covered and the performance of the aircraft is optimised.

The hybrid propulsion system takes advantage of a better specific power of gas turbine engines at take-off, while it further takes the advantage of minimizing the weight and drag of a fuel cell based propulsion system, since a much smaller cooling system is necessary if the fuel cell propulsion is provided for base thrust only. By taking into consideration the different thrust requirements during different mission segments, the power density of the hybrid propulsion is maximised.

### List of reference numbers:

- 10: hybrid propulsion system
- 11: first propulsion system
- 12: second propulsion system
- 13, 14: fuel cell based propulsors / engines
- 15, 16: combustion engines / propulsors
- 17: power
- 18: altitude
- 18a: cruise altitude
- 100: hybrid aircraft

- A: base load section
- B: peak load section

## Claims

1. Hybrid propulsion system for propelling an aircraft (100), comprising
a first propulsion system (11) based on fuel cells,
a second propulsion (12) system based on one or more combustion engines (15, 16),
a control unit for controlling the operation of the first propulsion system (11) and of the second propulsion system (12) depending on the load thrust in a specific segment of a flight mission,
wherein the first propulsion system (11) is designed for fully providing a base thrust needed in base load segments (A) of the flight mission including taxiing, cruise of the aircraft at a cruise altitude, descent and landing segments,
the second propulsion system (12) is designed for providing a peak thrust needed during peak load segments (B) of the flight mission including take-off of the aircraft (100), and/or for assisting the first propulsion system (11) in propelling the aircraft (100) when the peak thrust is needed,
wherein the second propulsion system (12) is operated by the control unit to be turned-off or providing essentially no thrust during taxiing, cruise at the
cruise altitude, descend and landing segments of the flight mission, as long as the peak thrust of the second propulsion system (12) is not needed due to other specific conditions.

2. Hybrid propulsion system according to claim 1, wherein the first propulsion system (11) is designed for fully propelling the aircraft (100) during climb segments at a relatively low climb rate after take-off of a flight mission.

3. Hybrid propulsion system according to claim 1 or 2, wherein the control unit is configured for controlling the operation of the first propulsion system (11) and of the second propulsion system (12) depending on an ambient temperature.

4. Hybrid propulsion system according to one of the preceding claims, wherein the first and the second propulsion system (11, 12) are powered by the same fuel.

5. Hybrid propulsion system according to one of the preceding claims, wherein the first and the second propulsion system (11, 12) are designed for sending electric power to each other.

6. Hybrid propulsion system according to one of the preceding claims, wherein
6.1. the second propulsion system (12) is designed for transmitting electrical power to augment the thrust of the first propulsion system (11) during take-off and/or climb and/or fuel cell failures, and/or
6.2. the first propulsion system (11) is designed for transmitting electrical power to an electric machine attached to the second propulsion system (12) during cruise and/or descend.

7. Hybrid propulsion system according to one of the preceding claims, further comprising a thermal management system optimized for cooling the first propulsion system (11) during cruise of the aircraft (100) at the cruise altitude or a different predefined condition if fuel cell usage is to be further maximized.

8. Method of operating a hybrid propulsion system for propelling an aircraft (100),
the hybrid propulsion system comprising a first propulsion system (11) based on fuel cells and a second propulsion system (12) based on one or more combustion engines (15, 16),
the operation of the first propulsion system (11) and of the second propulsion system (12) being controlled by a control unit depending on the load thrust in a specific segment of a flight mission,
wherein the first propulsion system (11) is fully providing a base thrust for propelling the aircraft in base load segments (A) of the flight mission including taxiing, cruise of the aircraft at a cruise altitude, descent and landing segments, and
the second propulsion system (12) providing a peak thrust during peak load segments (B) of the flight mission including take-off, and/or assisting the first propulsion system (11) in propelling the aircraft (100),
wherein the second propulsion system (12) is turned-off or operated to provide essentially no thrust during taxiing, cruise of the aircraft at the cruise altitude, descend and landing segments of the flight mission, as long as the peak thrust is not needed due to other specific conditions.

9. Method according to claim 8, wherein the first propulsion system (11) is fully propelling the aircraft (100) during climb segments at a relatively low climb rate after take-off of a flight mission.

10. Method according to claim 8 or 9, wherein the second propulsion system (12) is fully propelling the aircraft (100) or assisting the first propulsion system (11) in propelling the aircraft (100) during conditions requiring the peak thrust and/or at high ambient temperatures.

11. Method according to one of claims 8 to 10, wherein the operation of the first propulsion system (11) and of the second propulsion system (12) are controlled depending on an ambient temperature.

12. Method according to one of claims 8 to 11, wherein the same fuel is provided to the first and the second propulsion system (12) for propelling the aircraft (100).

13. Method according to one of claims 8 to 12, wherein
13.1. the second propulsion system (12) is transmitting electrical power to augment the thrust of the first propulsion system (11) during take-off and climb and/or fuel cell failures, and/or
13.2. the first propulsion system (11) is transmitting electrical power to an electric machine attached to the second propulsion system (12) during cruise and/or descend.

14. Method according to one of claims 8 to 13, wherein the first propulsion system (11) is cooled by a thermal management system optimized for cooling it during cruise of the aircraft (100) at the cruise altitude or a different predefined condition if fuel cell usage is to be further maximized.

15. Hybrid aircraft, comprising a hybrid propulsion system according to one of claims 1 to 7 and being operated by using the method according to one of claims 8 to 14.

## Patentansprüche

1. Hybridantriebssystem zum Antreiben eines Flugzeugs (100), umfassend
ein erstes Antriebssystem (11) auf Basis von Brennstoffzellen,
ein zweites Antriebssystem (12) auf Basis eines oder mehrerer Verbrennungsmotoren (15, 16),
eine Steuereinheit zum Steuern des Betriebs des ersten Antriebssystems (11) und des zweiten Antriebssystems (12) in Abhängigkeit vom Lastschub in einem spezifischen Abschnitt einer Flugmission,
wobei das erste Antriebssystem (11) dazu ausgelegt ist, einen in Basislastabschnitten (A) der Flugmission, einschließlich Rollen, Reiseflug des Flugzeugs auf einer Reiseflughöhe, Sinkflug- und Landungsabschnitten, benötigten Basisschub vollständig bereitzustellen,
wobei das zweite Antriebssystem (12) dazu ausgelegt ist, einen während Spitzenlastabschnitten (B) der Flugmission, einschließlich eines Starts des Flugzeugs (100), benötigten Spitzenschub bereitzustellen und/oder das erste Antriebssystem (11) beim Antreiben des Flugzeugs (100) zu unterstützen, wenn der Spitzenschub benötigt wird,
wobei das zweite Antriebssystem (12) von der Steuereinheit so betrieben wird, dass es während des Rollens, des Reiseflugs auf der Reiseflughöhe, Sinkflug- und Landungsabschnitten der Flugmission abgeschaltet ist oder im Wesentlichen keinen Schub liefert, solange der Spitzenschub des zweiten Antriebssystems (12) aufgrund anderer spezifischer Bedingungen nicht benötigt wird.

2. Hybridantriebssystem nach Anspruch 1, wobei das erste Antriebssystem (11) dazu ausgelegt ist, das Flugzeug (100) während Steigflugabschnitten mit einer relativ geringen Steiggeschwindigkeit nach dem Start einer Flugmission vollständig anzutreiben.

3. Hybridantriebssystem nach Anspruch 1 oder 2, wobei die Steuereinheit zum Steuern des Betriebs des ersten Antriebssystems (11) und des zweiten Antriebssystems (12) in Abhängigkeit von einer Umgebungstemperatur konfiguriert ist.

4. Hybridantriebssystem nach einem der vorhergehenden Ansprüche, wobei das erste und das zweite Antriebssystem (11, 12) mit dem gleichen Kraftstoff betrieben werden.

5. Hybridantriebssystem nach einem der vorhergehenden Ansprüche, wobei das erste und das zweite Antriebssystem (11, 12) dazu ausgelegt sind, einander elektrische Leistung zuzuführen.

6. Hybridantriebssystem nach einem der vorhergehenden Ansprüche, wobei
6.1. das zweite Antriebssystem (12) dazu ausgelegt ist, elektrische Leistung zu übertragen, um den Schub des ersten Antriebssystems (11) während eines Starts und/oder Steigflugs und/oder bei Ausfall von Brennstoffzellen zu verstärken; und/oder
6.2. das erste Antriebssystem (11) dazu ausgelegt ist, während des Reiseflugs und/oder des Sinkflugs elektrische Leistung an eine elektrische Maschine zu übertragen, die an das zweite Antriebssystem (12) angeschlossen ist.

7. Hybridantriebssystem nach einem der vorhergehenden Ansprüche, ferner umfassend ein Wärmemanagementsystem, das zum Kühlen des ersten Antriebssystems (11) während des Reiseflugs des Flugzeugs (100) auf der Reiseflughöhe oder unter einer anderen vordefinierten Bedingung optimiert ist, wenn eine Brennstoffzellennutzung weiter maximiert werden soll.

8. Verfahren zum Betreiben eines Hybridantriebssystems zum Antreiben eines Flugzeugs (100),
wobei das Hybridantriebssystem ein erstes Antriebssystem (11) auf Basis von Brennstoffzellen und ein zweites Antriebssystem (12) auf Basis eines oder mehrerer Verbrennungsmotoren (15, 16) umfasst,
wobei der Betrieb des ersten Antriebssystems (11) und des zweiten Antriebssystems (12) von einer Steuereinheit in Abhängigkeit vom Lastschub in einem spezifischen Abschnitt einer Flugmission gesteuert wird,
wobei das erste Antriebssystem (11) einen Basisschub zum Antreiben des Flugzeugs in Basislastabschnitten (A) der Flugmission, einschließlich Rollen, Reiseflug des Flugzeugs auf einer Reiseflughöhe, Sinkflug- und Landungsabschnitten, vollständig bereitstellt und
das zweite Antriebssystem (12) einen Spitzenschub während Spitzenlastabschnitten (B) der Flugmission, einschließlich eines Starts, bereitstellt und/oder das erste Antriebssystem (11) beim Antreiben des Flugzeugs (100) unterstützt, wobei das zweite Antriebssystem (12) während des Rollens, des Reiseflugs des Flugzeugs auf der Reiseflughöhe, Sinkflug- und Landungsabschnitten der Flugmission abgeschaltet ist oder so betrieben wird, dass es im Wesentlichen keinen Schub liefert, solange der Spitzenschub nicht aufgrund anderer spezifischer Bedingungen benötigt wird.

9. Verfahren nach Anspruch 8, wobei das erste Antriebssystem (11) das Flugzeug (100) während Steigflugabschnitten mit einer relativ geringen Steiggeschwindigkeit nach dem Start einer Flugmission vollständig antreibt.

10. Verfahren nach Anspruch 8 oder 9, wobei das zweite Antriebssystem (12) unter Bedingungen, die den Spitzenschub erfordern, und/oder bei hohen Umgebungstemperaturen das Flugzeug (100) vollständig antreibt oder das erste Antriebssystem (11) beim Antreiben des Flugzeugs (100) unterstützt.

11. Verfahren nach einem der Ansprüche 8 bis 10, wobei der Betrieb des ersten Antriebssystems (11) und des zweiten Antriebssystems (12) in Abhängigkeit von einer Umgebungstemperatur gesteuert wird.

12. Verfahren nach einem der Ansprüche 8 bis 11, wobei dem ersten und dem zweiten Antriebssystem (12) zum Antreiben des Flugzeugs (100) derselbe Kraftstoff bereitgestellt wird.

13. Verfahren nach einem der Ansprüche 8 bis 12, wobei
13.1. das zweite Antriebssystem (12) elektrische Leistung überträgt, um den Schub des ersten Antriebssystems (11) während eines Starts und Steigflugs und/oder bei Ausfall von Brennstoffzellen zu verstärken, und/oder
13.2. das erste Antriebssystem (11) während des Reiseflugs und/oder des Sinkflugs elektrische Leistung an eine elektrische Maschine überträgt, die an das zweite Antriebssystem (12) angeschlossen ist.

14. Verfahren nach einem der Ansprüche 8 bis 13, wobei das erste Antriebssystem (11) durch ein Wärmemanagementsystem gekühlt wird, das zu dessen Kühlung während des Reiseflugs des Flugzeugs (100) auf der Reiseflughöhe oder unter einer anderen vordefinierten Bedingung optimiert ist, wenn eine Brennstoffzellennutzung weiter maximiert werden soll.

15. Hybridflugzeug, das ein Hybridantriebssystem nach einem der Ansprüche 1 bis 7 umfasst und unter Verwendung des Verfahrens nach einem der Ansprüche 8 bis 14 betrieben wird.

## Revendications

1. Système de propulsion hybride pour propulser un aéronef (100), comprenant
un premier système de propulsion (11) basé sur des piles à combustible,
un deuxième système de propulsion (12) basé sur un ou plusieurs moteurs à combustion (15, 16),
une unité de commande pour commander le fonctionnement du premier système de propulsion (11) et du deuxième système de propulsion (12) en fonction de la poussée de charge dans un segment spécifique d'une mission de vol,
le premier système de propulsion (11) étant conçu pour fournir intégralement une poussée de base nécessaire dans les segments de charge de base (A) de la mission de vol comportant des segments de roulage au sol, de vol de croisière de l'aéronef à une altitude de croisière, de descente et d'atterrissage,
le deuxième système de propulsion (12) étant conçu pour fournir une poussée maximale nécessaire pendant des segments de charge maximale (B) de la mission de vol comportant le décollage de l'aéronef (100), et/ou pour assister le premier système de propulsion (11) dans la propulsion de l'aéronef (100) lorsque la poussée maximale est nécessaire,
le deuxième système de propulsion (12) étant commandé par l'unité de commande pour être coupé ou fournir essentiellement aucune poussée pendant des segments de roulage au sol, de vol de croisière à l'altitude de croisière, de descente et d'atterrissage de la mission de vol, tant que la poussée maximale du deuxième système de propulsion (12) n'est pas nécessaire en raison d'autres conditions spécifiques.

2. Système de propulsion hybride selon la revendication 1, dans lequel le premier système de propulsion (11) est conçu pour propulser intégralement l'aéronef (100) pendant des segments de montée à un taux de montée relativement faible après le décollage d'une mission de vol.

3. Système de propulsion hybride selon la revendication 1 ou 2, dans lequel l'unité de commande est configurée pour commander le fonctionnement du premier système de propulsion (11) et du deuxième système de propulsion (12) en fonction d'une température ambiante.

4. Système de propulsion hybride selon l'une des revendications précédentes, dans lequel le premier et le deuxième système de propulsion (11, 12) sont alimentés par le même combustible.

5. Système de propulsion hybride selon l'une des revendications précédentes, dans lequel le premier et le deuxième système de propulsion (11, 12) sont conçus pour échanger de la puissance électrique entre eux.

6. Système de propulsion hybride selon l'une des revendications précédentes, dans lequel
6.1. le deuxième système de propulsion (12) est conçu pour transmettre de la puissance électrique afin d'augmenter la poussée du premier système de propulsion (11) pendant le décollage et/ou la montée et/ou en cas de défaillances des piles à combustible ; et/ou
6.2. le premier système de propulsion (11) est conçu pour transmettre de la puissance électrique à une machine électrique couplée au deuxième système de propulsion (12) pendant le vol de croisière et/ou la descente.

7. Système de propulsion hybride selon l'une des revendications précédentes, comprenant en outre un système de gestion thermique optimisé pour refroidir le premier système de propulsion (11) pendant le vol de croisière de l'aéronef (100) à l'altitude de croisière ou dans une condition prédéfinie différente si l'utilisation des piles à combustible doit être maximisée davantage.

8. Procédé de fonctionnement d'un système de propulsion hybride pour propulser un aéronef (100),
le système de propulsion hybride comprenant un premier système de propulsion (11) basé sur des piles à combustible et un deuxième système de propulsion (12) basé sur un ou plusieurs moteurs à combustion (15, 16),
le fonctionnement du premier système de propulsion (11) et du deuxième système de propulsion (12) étant commandé par une unité de commande en fonction de la poussée de charge dans un segment spécifique d'une mission de vol,
le premier système de propulsion (11) fournissant intégralement une poussée de base pour propulser l'aéronef dans des segments de charge de base (A) de la mission de vol comportant des segments de roulage au sol, de vol de croisière de l'aéronef à une altitude de croisière, de descente et d'atterrissage, et
le deuxième système de propulsion (12) fournissant une poussée maximale pendant des segments de charge maximale (B) de la mission de vol comportant le décollage, et/ou assistant le premier système de propulsion (11) dans la propulsion de l'aéronef (100), le deuxième système de propulsion (12) étant coupé ou commandé pour fournir essentiellement aucune poussée pendant des segments de roulage au sol, de vol de croisière de l'aéronef à l'altitude de croisière, de descente et d'atterrissage de la mission de vol, tant que la poussée maximale n'est pas nécessaire en raison d'autres conditions spécifiques.

9. Procédé selon la revendication 8, dans lequel le premier système de propulsion (11) propulse intégralement l'aéronef (100) pendant des segments de montée à un taux de montée relativement faible après le décollage d'une mission de vol.

10. Procédé selon la revendication 8 ou 9, dans lequel le deuxième système de propulsion (12) propulse intégralement l'aéronef (100) ou assiste le premier système de propulsion (11) dans la propulsion de l'aéronef (100) lors de conditions nécessitant la poussée maximale et/ou à des températures ambiantes élevées.

11. Procédé selon l'une des revendications 8 à 10, dans lequel le fonctionnement du premier système de propulsion (11) et du deuxième système de propulsion (12) est commandé en fonction d'une température ambiante.

12. Procédé selon l'une des revendications 8 à 11, dans lequel le même combustible est fourni au premier et au deuxième système de propulsion (12) pour propulser l'aéronef (100).

13. Procédé selon l'une des revendications 8 à 12, dans lequel
13.1. le deuxième système de propulsion (12) transmet de la puissance électrique afin d'augmenter la poussée du premier système de propulsion (11) pendant le décollage et la montée et/ou en cas de défaillances des piles à combustible, et/ou
13.2. le premier système de propulsion (11) transmet de la puissance électrique à une machine électrique couplée au deuxième système de propulsion (12) pendant le vol de croisière et/ou la descente.

14. Procédé selon l'une des revendications 8 à 13, dans lequel le premier système de propulsion (11) est refroidi par un système de gestion thermique optimisé pour le refroidir pendant le vol de croisière de l'aéronef (100) à l'altitude de croisière ou dans une condition prédéfinie différente si l'utilisation des piles à combustible doit être davantage maximisée.

15. Aéronef hybride, comprenant un système de propulsion hybride selon l'une des revendications 1 à 7 et fonctionnant au moyen du procédé selon l'une des revendications 8 à 14.
